# EUROPÄISCHE PATENTSCHRIFT

(11) **EP 1 522 826 B1**
(45) Veröffentlichungstag und Bekanntmachung des Hinweises auf die Patenterteilung: **19.01.2011**
(21) Anmeldenummer: 04022640.9
(22) Anmeldetag: 23.09.2004
(51) Int. Cl.: G01D 5/347, G01D 11/20

(54) **Sicherungsvorrichtung für den Transport und die Montage einer Messeinrichtung**
Securing device for transporting and mounting a measuring assembly
Dispositif de sécurisation d'un ensemble de mesure pendant le transport et le montage

(30) Priorität: 10.10.2003 DE 10347965
(43) Veröffentlichungstag der Anmeldung: 13.04.2005
(73) Patentinhaber: Dr. Johannes Heidenhain GmbH, 83292 Traunreut (DE)
(72) Erfinder: Mauermann, Christian, 83278 Traunstein (DE)

(56) Entgegenhaltungen:
- DE-A- 19 918 654

## Beschreibung

Die Erfindung betrifft eine Sicherungsvorrichtung für den Transport und die Montage einer Messeinrichtung zur Bestimmung der Lage zweier relativ zueinander beweglicher Bauteile nach dem Oberbegriff des Patentanspruchs 1.

Eine solche Sicherungsvorrichtung dient dazu, bei dem Transport und bei der Montage einer Messeinrichtung, die eine längserstreckte Messteilung, einen Trägerkörper für die Messteilung, eine die Messteilung abtastende und in einem definierten Abstand von der Messteilung geführte Abtasteinrichtung sowie einen Montagefuß zum Befestigen der Abtasteinrichtung an einem der beiden zueinander beweglichen Bauteile aufweist, die Abtasteinrichtung in einer definierten Position (Solllage) gegenüber dem Trägerkörper der Messeinrichtung festzulegen. Die Sicherungsvorrichtung umfasst hierzu einen entlang einer Führungsbahn des Trägerkörpers längsverschieblichen Grundkörper, der einerseits an dem Montagefuß und andererseits an dem Trägerkörper festlegbar ist, um den Montagefuß in einer vorgebbaren Solllage bezüglich des Trägerkörpers halten zu können.

Bei den beiden zueinander beweglichen Bauteilen kann es sich insbesondere um den Schlitten und das zugehörige Bett einer Werkzeugmaschine handeln. In diesem Fall werden der Trägerkörper mit der Messteilung einerseits und der Montagefuß mit der Abtasteinrichtung andererseits an jeweils einem dieser beiden Bauteile befestigt.

Aus der DE 199 18 654 A1 ist eine Sicherungsvorrichtung der eingangs genannten Art bekannt, die zwei entlang der Erstreckungsrichtung der Messteilung voneinander beabstandete Grundkörper aufweist, welche an je einer Stirnseite des Montagefußes angeordnet und über ein Führungselement miteinander verbunden sind. Die beiden Grundkörper lassen sich jeweils durch Klemmkräfte an dem Trägerkörper der Messteilung festlegen, so dass der Montagefuß zwischen den beiden Grundkörpern an einer definierten Stelle des Trägerkörpers der Messteilung positionierbar ist. Hierbei wird eine beidseitige sichere Abstützung des Montagefußes in seiner Solllage ermöglicht.

Der Erfindung liegt das Problem zugrunde, eine Sicherungsvorrichtung der eingangs genannten Art weiter zu verbessern, insbesondere im Hinblick auf eine vereinfachte Positionierung des Montagefußes an dem Trägerkörper mittels der Sicherungsvorrichtung.

Dieses Problem wird erfindungsgemäß durch die Schaffung einer Sicherungsvorrichtung mit den Merkmalen des Anspruchs 1 gelöst.

Danach steht von dem Grundkörper der Sicherungsvorrichtung ein Fortsatz ab, der sich entlang der Messteilung erstreckt und an dem Verbindungsmittel vorgesehen sind, die bei Festlegung des Grundkörpers der Sicherungsvorrichtung an dem Montagefuß automatisch mit einer zugeordneten Verbindungsstelle des Montagefußes in Eingriff bringbar sind.

Die erfindungsgemäße Lösung ermöglicht in nur einem Arbeitsgang und insbesondere durch Betätigung der Sicherungsvorrichtung an nur einer Stelle, nämlich an deren Grundkörper, eine Verbindung der Sicherungsvorrichtung mit dem Montagefuß an zwei entlang der Erstreckungsrichtung der Messteilung bzw. in Verschieberichtung des Grundkörpers voneinander beabstandeten Stellen des Montagefußes, vorzugsweise in der Umgebung der beiden Stirnseiten des Montagefußes.

Für eine besonders einfache Ausbildung der Sicherungsvorrichtung ist der Fortsatz einstückig an den Grundkörper angeformt. Alternativ können jedoch Grundkörper und Fortsatz der Sicherungsvorrichtung auch durch separate, miteinander verbundene Baugruppen gebildet werden.

Die Verbindungsmittel sind wiederum bevorzugt einstückig an dem Fortsatz angeformt und zur Einführung in eine zugeordnete Verbindungsstelle des Montagefußes vorgesehen, und zwar insbesondere zur Bildung einer (formschlüssigen) Rast- bzw. Steckverbindung durch Verschieben des Grundkörpers entlang der hierfür vorgesehen Führungsbahn des Trägerkörpers.

Weiterhin ist der Fortsatz im Bereich der Verbindungsmittel bevorzugt derart abgewinkelt, dass die Verbindungsmittel über eine an der Verbindungsstelle des Montagefußes vorgesehene Rampe gleiten können.

Mit Vorteil sind an dem Fortsatz Führungsmittel vorgesehen, mittels derer der Fortsatz entlang einer zugeordneten Führungseinrichtung des Trägerkörpers, insbesondere entlang der selben Führungsbahn wie der Grundkörper der Sicherungsvorrichtung, in Erstreckungsrichtung der Messteilung verschiebbar ist. Die Führungsmittel schließen sich in Erstreckungsrichtung des Fortsatzes unmittelbar an die Verbindungsmittel an und werden mit Vorteil durch zwei entlang jener Erstreckungsrichtung voneinander beabstandete Führungsbereiche gebildet. Hiermit lässt sich erreichen, dass beim Eingreifen der Verbindungsmittel des Fortsatzes in die zugeordnete Verbindungsstelle des Montagefußes, insbesondere bei einem gleichzeitigen Überfahren einer Rampe des Montagefußes, durch Anheben, also durch eine Bewegung quer zur Verschieberichtung des Grundkörpers und des Fortsatzes, der Fortsatz an dem Trägerkörper festgeklemmt wird, indem die Führungsmittel des Fortsatzes gegen die zugeordnete Führungseinrichtung des Trägerkörpers gedrückt werden.

Für eine besonders stabile Fixierung des Fortsatzes an dem Montagefuß einerseits und an dem Trägerkörper andererseits weist der Fortsatz zwei im Wesentlichen parallel zueinander verlaufende Schenkel auf, die jeweils mit Verbindungsmitteln sowie Führungsmitteln versehen sind.

Der Grundkörper der Sicherungsvorrichtung selbst ist derart ausgebildet, dass er sich an dem Montagefuß durch Verschieben entlang der Führungsbahn des Trägerkörpers mittels einer Steck- und/oder Rastverbindung formschlüssig befestigen lässt. Der Grundkörper kann hierzu einerseits Steckerelemente aufweisen, die in einen zugeordneten Steckerbereich des Montagefußes einsteckbar sind. Diese Steckerelemente werden bevorzugt durch jeweils einen Vorsprung, insbesondere in Form einer Andrücknase, des Grundkörpers gebildet, die sich in eine Ausnehmung des Montagefußes einstecken lassen. Ferner kann der Grundkörper ein Rastelement in Form eines elastischen Rasthebels aufweisen, der in eine als Rastöffnung ausgebildete Raststelle des Montagefußes einrastbar ist.

Um den Grundkörper in einer definierten Position an dem Trägerkörper festlegen zu können und hierdurch auch den Montagefuß bezüglich des Trägerkörpers zu positionieren, weist der Grundkörper Führungsmittel auf, die entlang der Führungsbahn des Trägerkörpers in Erstreckungsrichtung der Messteilung verschiebbar und an dieser mittels eines Betätigungselementes festklemmbar sind. Das Betätigungselement ist bevorzugt drehbar ausgebildet und kann beispielsweise als Rändelschraube bzw. Rändelmutter ausgeführt sein. Diese wirkt bei ihrer Betätigung auf ein (separates) Klemmelement ein, welches wiederum die Führungsmittel gegen die Führungsbahn des Trägerkörpers verspannt und hierdurch die Klemmverbindung herstellt.

Mit dem Betätigungselement lassen sich drei unterschiedliche Zustände des Klemmelementes einstellen, wobei in dem einen Zustand des Klemmelementes die Sicherungsvorrichtung von dem Trägerkörper abnehmbar ist, in einem weiteren Zustand des Klemmelementes die Sicherungsvorrichtung entlang der Führungsbahn verschiebbar ist und in dem dritten Zustand des Klemmelementes die Sicherungsvorrichtung klemmend an dem Trägerkörper fixiert ist. An dem Betätigungselement können Raststellen vorgesehen sein, mittels derer sich das Betätigungselement in den verschiedenen Positionen arretieren lässt, die den drei vorgenannten Zuständen des Klemmelementes entsprechen. Alternativ können die den drei vorgenannten Zuständen des Klemmelementes entsprechenden Positionen des Betätigungselementes durch Markierungen gekennzeichnet sein.

Gemäß einer Weiterbildung der Erfindung weist das Betätigungselement zur Bildung einer Rücklaufsperre Sperrmittel auf, die durch Zusammenwirken mit einem zugeordneten Sperrelement des Grundkörpers verhindern, dass das Betätigungselement versehentlich in einen Zustand überführt wird, in dem das Klemmstück sich von der Sicherungsvorrichtung lösen würde.

Eine Messeinrichtung zur Bestimmung der Lage zweier relativ zueinander beweglicher Bauteile mit einer erfindungsgemäßen Sicherungsvorrichtung ist durch die Merkmale des Patentanspruchs 30 charakterisiert.

Der Montagefuß einer solchen Messeinrichtung weist zwei entlang der Erstreckungsrichtung der Messteilung voneinander beabstandete Stirnseiten auf, wobei der Grundkörper an der einen und der Fortsatz mit seinen Verbindungsmitteln in der Umgebung der anderen Stirnseite des Montagefußes festlegbar ist.

Hierzu ist an dem Montagefuß eine Verbindungsstelle vorgesehen, in die die Verbindungsmittel des Fortsatzes automatisch eingreifen, wenn der Grundkörper (durch Verschieben entlang der Führungsbahn des Trägerkörpers) an dem Montagefuß festgelegt wird. Dies geschieht bevorzugt in der Weise, dass beim Festlegen des Grundkörpers am Montagefuß der Fortsatz mit seinen Verbindungsmitteln in die zugeordnete Verbindungsstelle des Montagefußes einschnappt und hierdurch eine formschlüssige sowie gegebenenfalls ergänzend reibschlüssige Verbindung herstellt.

Die Verbindungsstelle des Montagefußes weist eine Rampe auf, mittels derer der Fortsatz im Bereich seiner Verbindungsmittel angehoben wird, so dass die Führungsmittel des Fortsatzes gegen einen Anschlag der zugeordneten Führungseinrichtung des Trägerkörpers gedrückt werden und eine klemmende Verbindung zwischen Fortsatz und Trägerkörper hergestellt wird.

Unter einer Rampe wird hier allgemein ein an der Verbindungsstelle des Montagefußes vorgesehenes Element angesehen, das eine Verschiebung bzw. Deformation der Verbindungsmittel des Fortsatzes quer zu deren Verschieberichtung an der Führungsbahn bzw. quer zu der Erstreckungsrichtung der Messteilung bewirkt, unabhängig von der geometrischen Ausgestaltung der Rampe. Diese muss also keineswegs zwingend nach Art einer schiefen Ebene oder dergleichen ausgebildet sein. Es genügt, dass die Rampe eine Bewegung der Verbindungsmittel (gegebenenfalls durch elastische Deformation der Verbindungsmittel) quer zur vorstehend genannten Erstreckung- bzw. Verschieberichtung bewirken kann.

Zur Erleichterung des Einführens der Verbindungsmittel des Fortsatzes in die zugeordnete Verbindungsstelle des Montagefußes weist dieser eine Einführphase auf.

Sofern der Fortsatz zwei parallel zueinander erstreckte Schenkel umfasst, die jeweils Verbindungs- und Führungsmittel aufweisen, sind an dem Montagefuß zwei (quer zu der Führungsbahn nebeneinander angeordnete) Verbindungsstellen vorgesehen, die je einem der beiden Schenkel des Fortsatzes zugeordnet sind.

Die Führungsbahn des Trägerkörpers, entlang der die Sicherungsvorrichtung bewegbar ist und an der sich die Sicherungsvorrichtung klemmend festlegen lässt, wird bevorzugt durch zwei parallel zueinander verlaufende Führungen gebildet, in die jeweils Führungsmittel des Grundkörpers sowie des Fortsatzes der Sicherungsvorrichtung eingreifen. Neben diesen beiden Führungen der Führungsbahn kann jeweils noch eine weitere (äußere) Führung verlaufen, in die die Sicherungsvorrichtung zusätzlich mit ihrem Grundkörper eingreift, um eine horizontale Fixierung der Sicherungsvorrichtung an dem Trägerkörper in der durch die verschiedenen Führungen definierten Ebene zu erreichen.

Weitere Merkmale und Vorteile der Erfindung werden bei der nachfolgenden Beschreibung eines Ausführungsbeispieles anhand der Figuren deutlich werden.

Es zeigen:
- Figur 1a-: eine perspektivische Darstellung einer Messeinrichtung zur Bestimmung der Lage zweier relativ zueinander beweglicher Bauteile mit einem Trägerkörper für eine längserstreckte Messteilung, mit einer die Messteilung abtastenden Abtasteinrichtung, die an dem Trägerkörper längsverschieblich geführt ist und die über einen Montagefuß an einem der zueinander beweglichen Bauteile befestigbar ist, sowie mit einer Sicherungsvorrichtung, um den Montagefuß in einer definierten Solllage an dem Trägerkörper zu halten;
- Figur 1b: eine weitere perspektivische Darstellung der Messeinrichtung aus Figur 1a, jedoch ohne Montagefuß;
- Figuren 2a und 2b: zwei unterschiedliche perspektivische Darstellungen der Sicherungs-vorrichtung aus den Figuren 1a und 1b;
- Figur 3: eine perspektivische Darstellung eines Ausschnittes der Sicherungsvorrichtung aus den Figuren 1a und 1b;
- Figur 4: eine perspektivische Darstellung des Montagefußes aus den Figuren 1a und 1b;
- Figur 5: eine perspektivische Darstellung eines Ausschnittes des Trägerkörpers aus den Figuren 1a und 1b;
- Figuren 6a bis 6d: vier Verfahrensschritte bei der Herstellung einer Verbindung zwischen Sicherungsvorrichtung und Montagefuß, um den Montagefuß mittels der Sicherungsvorrichtung in einer definierten Solllage am Trägerkörper zu positionieren;
- Figur 7a: eine vergrößerte Darstellung der Verbindungsmittel der Sicherungsvorrichtung beim Einfahren in eine zugeordnete Verbindungsstelle des Montagefußes;
- Figur 7b: das Zusammenwirken von Führungsmitteln der Sicherungsvorrichtung mit einer Führungsbahn des Trägerkörpers beim Einführen der Verbindungsmittel der Sicherungsvorrichtung in die Verbindungsstelle des Montagefußes gemäß Figur 7a;
- Figuren 8a und 8b: Darstellungen gemäß den Figuren 7a bzw. 7b, wobei die Verbindungsmittel eine Rampe der Verbindungsstelle überfahren;
- Figuren 9a und 9b: Darstellungen gemäß den Figuren 7a bzw. 7b nach Vollendung des Eingriffs der Verbindungsmittel in die Verbindungsstelle.

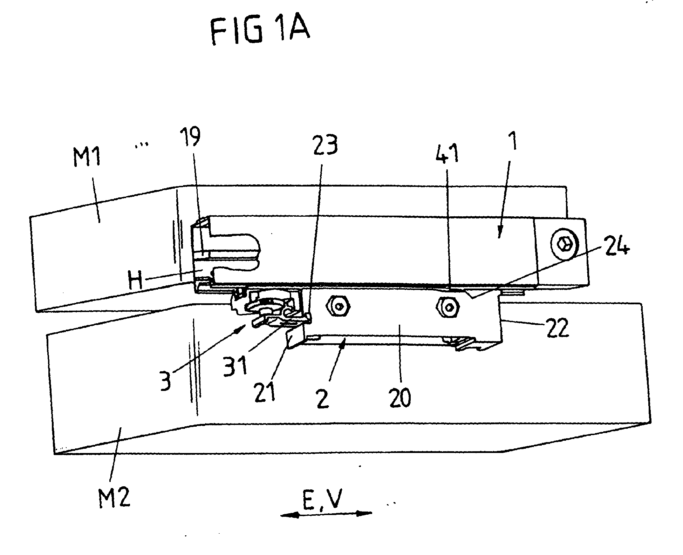

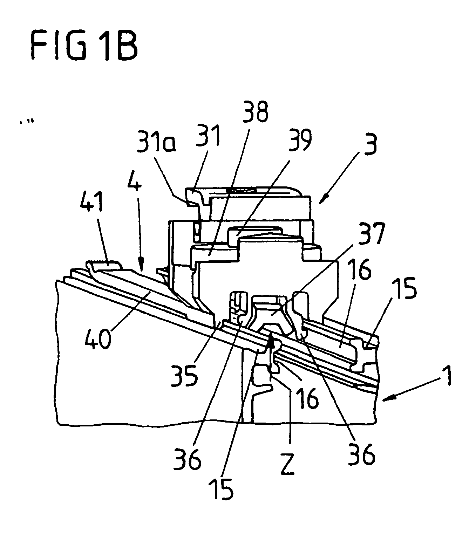

In den Figuren 1 a bis 5 ist eine Messeinrichtung zur Bestimmung der Lage zweier relativ zueinander beweglicher Bauteile (Maschinenbauteile M1, M2) einer Werkzeugmaschine dargestellt, die einen Trägerkörper 1 und eine Abtasteinrichtung 2 sowie eine Sicherungseinrichtung 3 umfasst, mit der die Abtasteinrichtung 2 in einer definierten Solllage an dem Trägerkörper 1 gehalten werden kann.

Der Trägerkörper 1 ist zur Befestigung an einem Maschinenbauteil, wie zum Beispiel dem Schlitten M1 einer Werkzeugmaschine, vorgesehen und ausgebildet, und weist ein längserstrecktes Hohlprofil 10 mit einer inneren Führungsbahn auf, die durch zwei parallel zueinander entlang der Erstreckungsrichtung E des Hohlprofils 10 verlaufende innere Führungen 16 gebildet wird. Neben jeder der inneren Führungen 16 erstreckt sich parallel eine äußere Führung 15.

Dieses Hohlprofil 10 umschließt einen inneren Hohlraum H, in dem eine längserstreckte Messteilung 19 angeordnet ist.
Innerhalb des Hohlprofils 10 ist längsverschieblich ein Abtastwagen 29 einer Abtasteinrichtung 2 angeordnet, der zum Abtasten der Messteilung 19 des Trägerkörpers 1 beispielsweise eine Lichtquelle, ein Linsensystem und zugeordnete Fotoelemente trägt. Der Abtastwagen 29 ist in bekannter Weise über einen Mitnehmer 28 federnd, aber in Erstreckungsrichtung E des Hohlprofils 10 (Messrichtung) starr mit einem außerhalb der Hohlkammer H des Hohlprofils 10 angeordneten Montagefuß 20 verbunden. Der Montagefuß 20 dient zur Befestigung der Abtasteinrichtung 2 an einem zweiten Maschinenbauteil, wie beispielsweise dem Bett M2 der oben erwähnten Werkzeugmaschine. Die Verschieberichtung V der Abtasteinrichtung 2, also des Montagefußes 20 und des Abtastwagens 29 an dem Trägerkörper 1 entspricht der Erstreckungsrichtung E des Hohlprofils 10 und der darin angeordneten Messteilung 19.

Eine Messeinrichtung der vorstehend beschriebenen Art ist allgemein bekannt und braucht daher hinsichtlich ihrer Funktion hier nicht näher erläutert zu werden.

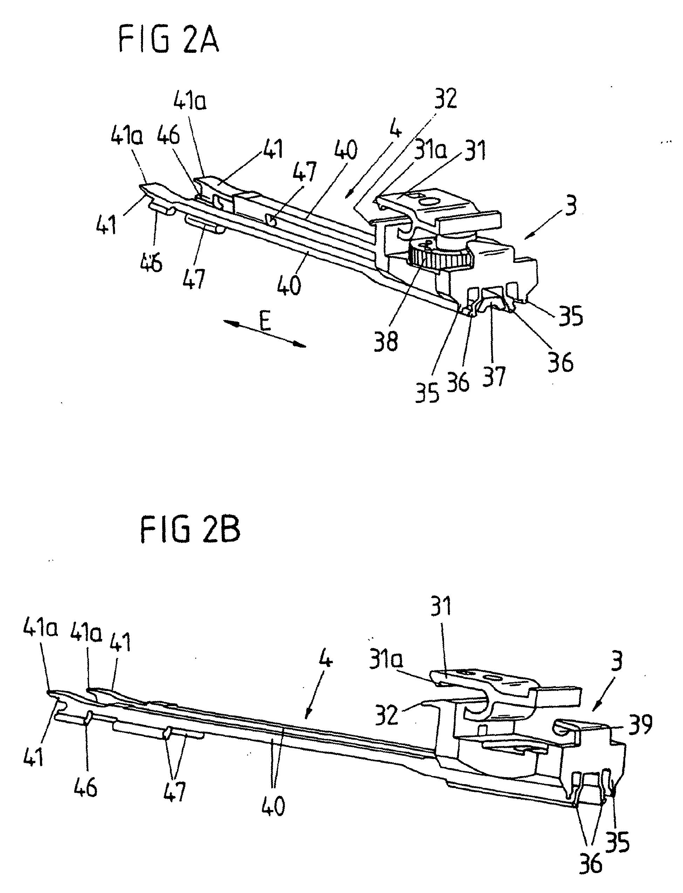

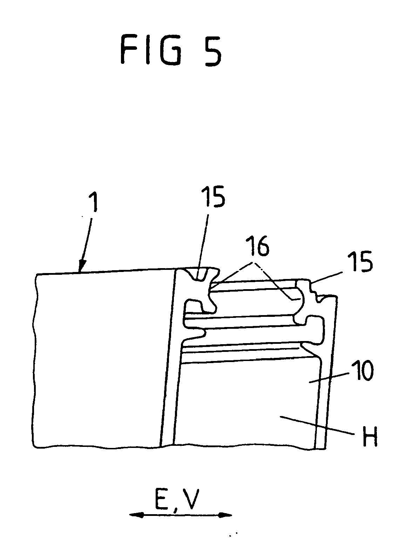

Gemäß den Figuren 1a bis 5 ist der Messeinrichtung eine Sicherungsvorrichtung 3, 4 zugeordnet, die mit dem Montagefuß 20 verbunden ist. Diese Sicherungsvorrichtung 3, 4 weist einen Grundkörper 3 und einen (einstückig hieran angeformten) entlang der Erstreckungsrichtung E des Hohlprofils 10 erstreckten Fortsatz 4 auf, der sich zwischen dem Montagefuß 20 und dem Trägerkörper 1 bzw. dessen Hohlprofil 10 erstreckt, also zwischen einander zugewandten Oberflächen des Montagefußes 20 einerseits und des Trägerkörpers 1 bzw. von dessen Hohlprofil 10 andererseits liegt. Der Fortsatz 4 ist gabelförmig ausgebildet mit zwei parallel zueinander verlaufenden Schenkeln 40. Die Sicherungsvorrichtung 3, 4 ist einerseits mit ihrem Grundkörper 3 an einer Stirnseite 21 des Montagefußes 20 und andererseits mit den beiden Schenkeln 40 ihres Fortsatzes 4 in der Nähe einer gegenüber liegenden Stirnseite 22 des Montagefußes 20 festlegbar.

Zur Festlegung des Grundkörpers 3 der Sicherungsvorrichtung 3, 4 an der einen Stirnseite 21 des Montagefußes 20 dient einerseits ein Steckerelement 32 in Form einer Andrücknase, das in einen zugeordneten Steckerbereich 23b in Form einer Ausnehmung an der einen Stirnseite 21 des Montagefußes 2 einführbar ist. Zum anderen dient hierzu ein Rastelement in Form eines federnden Rasthebels 31 mit einem Rastvorsprung 31a, der in eine zugeordnete Raststelle in Form einer Rastöffnung 23 mit einer Rastnut 23a an der einen Stirnseite 21 des Montagefußes 20 einrastbar ist.

Zur Festlegung der beiden Schenkel 40 des Fortsatzes 4 der Sicherungsvorrichtung 3, 4 an dem Montagefuß 20 vor seiner anderen Stirnseite 22, die entlang der Erstreckungsrichtung E des Fortsatzes 4 von der einen Stirnseite 21 beabstandet ist, dienen an den Enden der beiden parallelen Schenkel 40 ausgebildete Verbindungsmittel 41, 41 a in Form jeweils einer von dem entsprechenden Schenkel 40 abgewinkelten Lasche 41 mit einer Andrücknase 41 a. Diese Verbindungsmittel 41, 41 a sind in eine (durch eine Nut gebildete) zugeordnete Verbindungsstelle 24 des Montagefußes 20 einführbar, wobei eine formschlüssige Verbindung zwischen den Schenkeln 40 des Fortsatzes 4 und dem Montagefuß 20 der Abtasteinrichtung 2 hergestellt wird. Die besagte Verbindungsstelle 24 des Montagefußes 20 befindet sich an der dem Trägerkörper 1 bzw. dessen Hohlprofil 10 zugewandten Oberfläche des Montagefußes 20 (und liegt in Erstreckungsrichtung E des Fortsatzes 4 vor der zweiten Stirnseite 22 des Montagefußes 20).

Durch die vorstehend beschriebenen Maßnahmen lässt sich die Sicherungsvorrichtung 3, 4 einerseits im Bereich ihres Grundkörpers 3 und andererseits an dem dem Grundkörper 3 abgewandten Ende des Fortsatzes 4 jeweils im Bereich einer Stirnseite 21, 22 des Montagefußes 20 mit diesem verbinden. Zum Halten des Montagefußes 20 an dem Hohlprofil 10 des Trägerkörpers 1 in einer definierten Solllage ist es darüber hinaus erforderlich, die Sicherungsvorrichtung 3, 4 auch bezüglich des Hohlprofils 10 des Trägerkörpers 1 zu fixieren. Dies geschieht durch Klemmverbindungen, wie nachfolgend erläutert werden wird.

Anhand der Figuren 1 a bis 5 ist erkennbar, dass der Grundkörper 3 der Sicherungsvorrichtung 3, 4 mit Führungsmitteln in Form von Klemmfüßen 36 in die beiden inneren Führungen 16 des Hohlprofils 10 eingreift. Diesen Klemmfüßen 36 ist ein Klemmstück 37 zugeordnet, das als separates Teil zwischen den beiden Klemmfüßen 36 aufgenommen ist und das mittels eines zugeordneten Betätigungselementes in Form einer Rändelmutter 38 in einer Richtung z senkrecht zur Erstreckungsrichtung E des Hohlprofils 1 und des Fortsatzes 4 verschiebbar (anhebbar) ist, wobei es die Klemmfüße 36 des Grundkörpers 3 nach außen in die jeweils zugeordnete innere Führung 16 des Hohlprofils 10 drückt und hierdurch eine formschlüssige und zugleich klemmende Verbindung zwischen dem Grundkörper 3 und dem Hohlprofil 10 des Trägerkörpers 1 herstellt, durch die der Grundkörper 3 bezüglich des Trägerkörpers 1 sowohl entlang seiner Verschieberichtung V (aufgrund der Klemmwirkung) als auch horizontal und vertikal senkrecht zu der Verschieberichtung V (insbesondere aufgrund des Formschlusses) fixiert ist. Das Betätigungselement in Form einer Rändelmutter 38 wirkt hierzu über ein Innengewinde mit einem Außengewinde des Klemmstückes 37 zusammen.

Die Position des Grundkörpers 3 bezüglich des Hohlprofils 10 des Trägerkörpers 1 in horizontaler Richtung senkrecht zur Verschieberichtung V (also in der durch die inneren Führungen 16 definierten Ebenen) wird außerdem dadurch festgelegt, dass der Grundkörper 3 mit zusätzlichen, äußeren Führungsmitteln 35 in jeweils einer äußeren Führung 15 des Hohlprofils 10 geführt ist, wobei sich jede der beiden äußeren Führungen 15 neben einer der inneren Führungen 16 des Hohlprofils 10 und parallel zu dieser erstreckt.

Darüber hinaus erfolgt eine klemmende Verbindung zwischen Sicherungsvorrichtung 3, 4 und Hohlprofil 10 des Trägerkörpers 1 auch im Bereich der vorderen Enden der Schenkel 40 des Fortsatzes 4 und zwar mittels dort vorgesehener Führungsmittel 46, 47. Die an jedem der beiden Schenkel 40 des Fortsatzes 4 im Bereich seines vorderen Endes angeordneten Führungsmittel 46, 47 werden jeweils gebildet durch einen ersten Führungsbereich 46, der sich in Erstreckungsrichtung E des Fortsatzes 4 unmittelbar an die Verbindungsmittel 41 des jeweiligen Schenkels 40 anschließt, sowie durch einen zweiten, entlang der Erstreckungsrichtung E hiervon beabstandeten Führungsbereich 47. Zumindest die ersten Führungsbereiche 46 am jeweiligen Schenkel 40 des Fortsatzes 4 werden beim Eingreifen der Verbindungsmittel 41 des jeweiligen Schenkels 40 in die zugeordnete Verbindungsstelle 24 des Montagefußes 20, aufgrund des Zusammenwirkens mit einer dort jeweils vorgesehenen Rampe 25, derart angehoben, dass sie klemmend gegen einen zugeordneten Anschlag der jeweiligen inneren Führung 16 des Hohlprofils 10 des Trägerkörpers 1 gedrückt werden und hierdurch an diesem klemmend befestigt sind, wodurch zugleich die Position des Fortsatzes 40 (und damit auch des daran festgelegten Montagefußes 20) bezüglich des Hohlprofils in vertikaler Richtung z senkrecht zur Erstreckungsrichtung E bzw. Verschieberichtung V festgelegt ist.

Durch Betätigung des Klemmstückes 37 mittels der zugeordneten Rändelmutter 38 lassen sich insgesamt drei unterschiedliche Zustände des Grundkörpers 3 hinsichtlich seiner Positionierung am Hohlprofil 10 des Trägerkörpers 1 definieren. In dem einen Zustand ist das Klemmstück 37 mittels der Rändelmutter 38 soweit in vertikaler Richtung z angehoben, dass der Grundkörper 3 mittels der Klemmfüße 36 in den zugeordneten inneren Führungen 16 des Hohlprofils-10 klemmend befestigt ist. In dem anderen Zustand befindet sich das Klemmstück 37 in einer Position, in der es die Klemmfüße 36 des Grundkörpers 3 nicht auseinander drückt, so dass sich dieser in Verschieberichtung V in den inneren Führungen 16 sowie den äußeren Führungen 15 des Hohlprofils 10 verschieben lässt. In einem dritten Zustand schließlich ist das Klemmstück 37 so weit von dem Grundkörper 3 gelöst, so dass sich dieser von dem Hohlprofil 10 des Trägerkörpers 1 abnehmen lässt. Diese unterschiedlichen Zustände hinsichtlich der Befestigung des Grundkörpers 3 am Hohlprofil 10 entsprechen unterschiedlichen Positionen der Rändelmutter 38, denen jeweils entsprechende Raststellen 38a, 38b, 38c der Rändelmutter 38 zugeordnet sind. In jedem der drei vorbeschriebenen Zustände befindet sich eine dieser Raststellen 38a, 38b, 38c in Eingriff mit einem zugeordneten Rastelement 39 des Grundkörpers 3 in Form eines Rasthakens. Hierdurch lassen sich die entsprechenden Zustände mittels der Rändelmutter 38 definiert einstellen und die Rändelmutter 38 kann in einer dem jeweiligen Zustand entsprechenden Position gehalten werden.

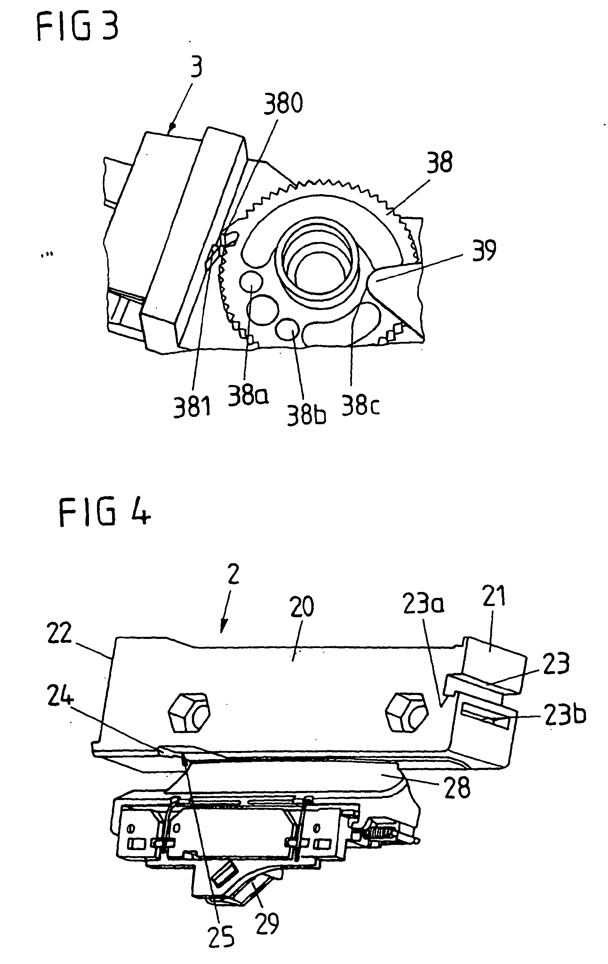

Ferner ist eine Rücklaufsperre 380, 381 vorgesehen, die verhindert, dass sich das Betätigungselement in Form einer Rändelmutter so weit in Löserichtung dreht, dass das Klemmstück 37 sich vollständig von dem Grundkörper 3 löst. Die Rücklaufsperre 380, 381 umfasst ein an der Rändelmutter 38 ausgebildetes elastisches Sperrmittel in Form einer Nase 380 sowie ein an dem Grundkörper 3 ausgebildetes Sperrelement 381. Bei einer Drehbewegung der Rändelmutter 38 in Fixierungsrichtung (also in Figur 3 im Uhrzeigersinn), die eine klemmende Befestigung des Grundkörpers 3 am Hohlprofil 10 des Trägerkörpers 1 bewirken soll, kann die an der Rändelmutter 38 vorgesehene Nase 381 das zugeordnete Sperrelement 381 des Grundkörpers 3 überfahren. Bei einer Rücklaufbewegung der Rändelmutter 38 in entgegengesetzter Richtung (in Löserichtung entgegen dem Uhrzeigersinn) tritt demgegenüber die an der Rändelmutter 38 vorgesehene Nase 380 mit dem am Grundkörper 3 vorgesehenen Sperrelement 381 in Eingriff und verhindert so ein Weiterdrehen der Rändelmutter 38 in Löserichtung, welches ein vollständiges Ablösen des Klemmstückes 37 von dem Grundkörper 3 zur Folge hätte.

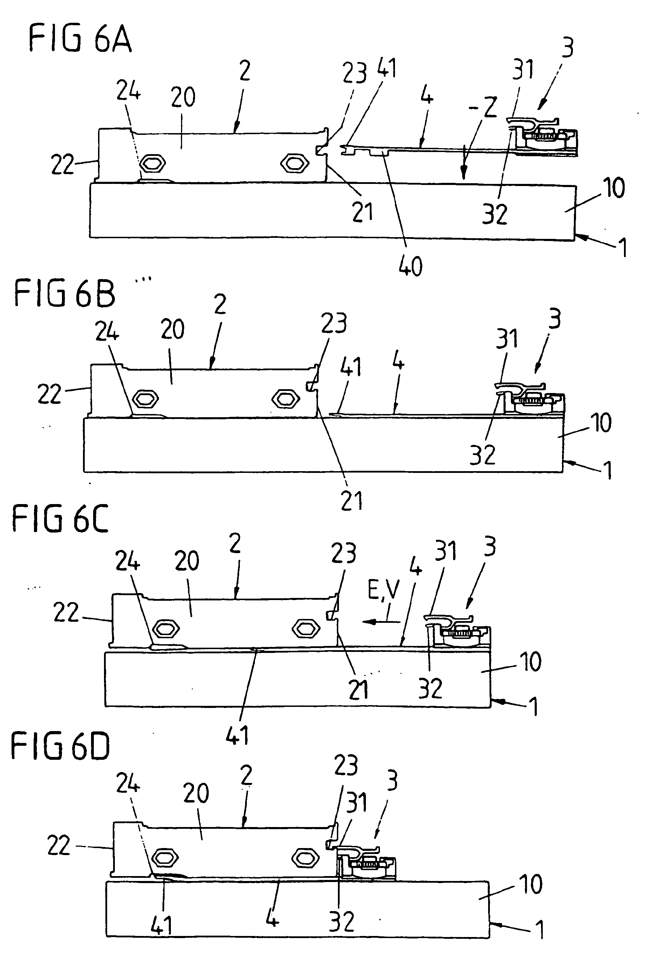

Im Folgenden wird nun anhand der Figuren 6a bis 9b beschrieben werden, wie die Sicherungsvorrichtung 3, 4 mit dem Montagefuß 20 verbunden wird, wobei eine Befestigung des Grundkörpers 3 an der einen Stirnseite 21 des Montagefußes 20 sogleich auch eine Verbindung zwischen Fortsatz 4 und Montagefuß 20 im Bereich von dessen anderer Stirnseite 22 zur Folge hat.

Gemäß Figur 6a wird die Sicherungsvorrichtung 3, 4 (Transportsicherung) auf das Hohlprofil 10 des Trägerkörpers 1 aufgesetzt und dann gemäß Figur 6b zwischen Hohlprofil 10 und Montagfuß 20 positioniert, wo dann eine weitere Verschiebung entlang einer Verschieberichtung V in Erstreckungsrichtung E des Hohlprofils 10 erfolgt, vgl. Figur 6c. Hierzu dienen die am Hohlprofil 10 vorgesehenen äußeren Führungen 15 und inneren Führungen 16, die, wie vorstehend anhand der Figuren 1 a bis 5 beschrieben, mit entsprechenden Führungsmitteln des Grundkörpers 3 und des Fortsatzes 4 der Sicherungsvorrichtung 3, 4 zusammen wirken. Die Verschiebung erfolgt derart, dass sich der Grundkörper 3 der Sicherungsvorrichtung 3, 4 der einen Stirnseite 21 des Montagefußes 20 nähert, bis die Andrücknase 32 des Grundkörpers 30 in die zugeordnete Ausnehmung 23b des Montagefußes 20 eingreift und schließlich der Rasthebel 31 des Grundkörpers 3 mit der zugeordneten Rastöffnung 23 des Montagefußes 2 zur Bildung einer verliersicheren, formschlüssigen Rastverbindung in Eingriff tritt, vgl. Figur 6d.

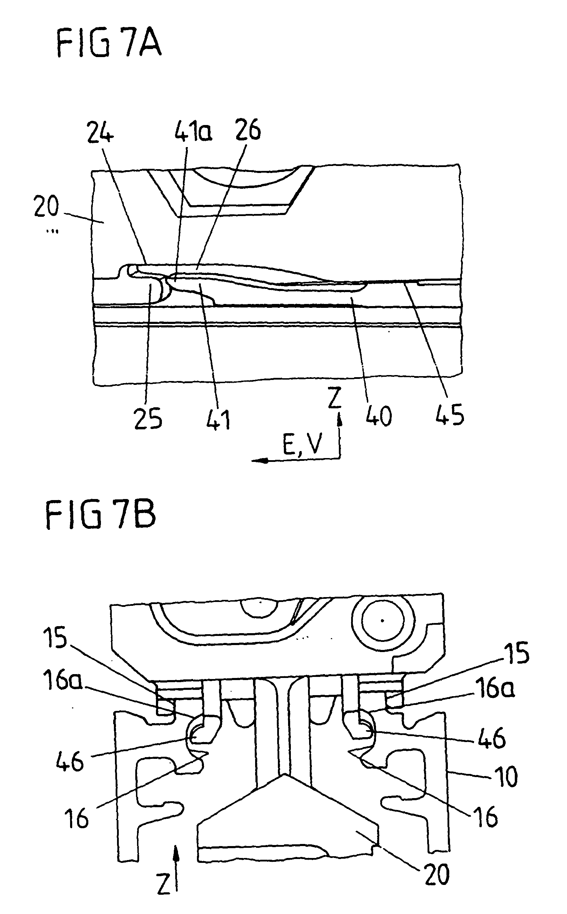

Während des Einschiebens des Rasthebels 31 und der Andrücknase 32 des Grundkörpers 3 in die zugeordnete Rastöffnung 23 bzw. Ausnehmung 23b des Montagefußes 20 treten die an den vorderen Enden der Schenkel 40 des Fortsatzes 4 vorgesehenen Verbindungsmittel 41 in Eingriff mit den zugeordneten Verbindungsstellen 24 im Bereich der anderen Stirnseite 22 des Montagefußes 20, wie nachfolgend anhand der Figuren 7a bis 9b näher beschrieben werden wird.

In dem in Figur 7a gezeigten Zustand dringen die als abgewinkelte Laschen ausgebildeten Verbindungsmittel 41 mit ihren vorderen Andrücknasen 41 a in die jeweils zugeordnete Verbindungsstelle 24 des Montagefußes 20 ein. Dabei werden diese mit horizontalem Formschluss zwischen dem Montagefuß 20 der Abtasteinrichtung 2 und dem Hohlprofil 10 des Trägerkörpers 1 aufgenommen.

Vor dem Erreichen dieses horizontalen Formschlusses durchfahren die Verbindungsmittel 41, 41 a jeweils eine am Montagefuß 20 vorgesehene Fase 26, die als Einführfase wirkt und vor dem Erreichen der in Figur 7a dargestellten Position, in der die Verbindungsmittel 41, 41 a formschlüssig zwischen Montagefuß 20 und Hohlprofil 10 aufgenommen sind, zusätzliches horizontales Spiel zur Verfügung stellt, um das Einführen der Verbindungsmittel 41 des Fortsatzes 4 in die zugeordnete Verbindungs-stelle 24 des Montagefußes 20 zu erleichtern.

Anhand Figur 7b wird deutlich, dass in dem dargestellten Zustand in vertikaler Richtung z noch einiges Spiel zwischen den vorderen Führungsbereichen 46 der Schenkel des Fortsatzes 4 und zugeordneten oberen Anschlägen 16a der inneren Führungen 16 des Hohlprofils 10 besteht.

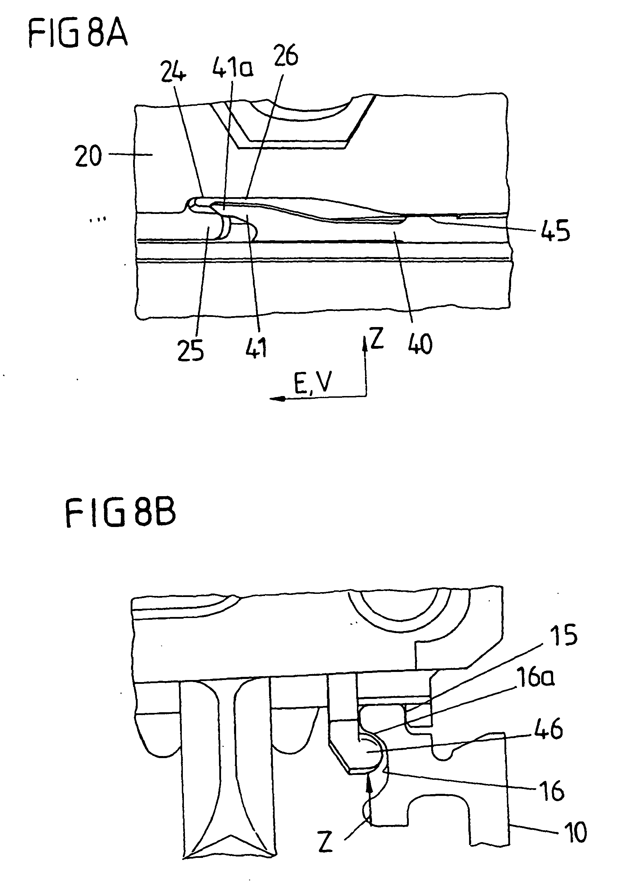

Bei einem weiteren Verschieben des Grundkörpers 3 und des Fortsatzes 4 der Sicherungsvorrichtung 3, 4 in Verschieberichtung V, so dass der Rasthebel 31 (vergl. Figur 6d) des Grundkörpers 3 in die zugeordnete Rastöffnung 23 des Montagefußes 20 einrastet, fahren die vorderen Andrücknasen 41 a der Verbindungsmittel 41, 41 a der Schenkel 40 des Fortsatzes 4 gemäß Figur 8a auf jeweils eine zugeordnete Rampe 25 in der jeweiligen Verbindungsstelle 24 des Montagefußes 20 auf. Hierbei werden die Laschen 41 der Verbindungsmittel 41, 41a etwas deformiert (in vertikaler Richtung z nach oben gebogen). Dabei wird ein vollständiges Durchbiegen der Schenkel 40 des Fortsatzes 4 in den Bereichen außerhalb der abgewinkelten Laschen 41 durch die hinteren Führungsbereiche 47 der Schenkel 40 verhindert.

Gleichzeitig werden die vorderen Führungsbereiche 46 (aufgrund des Anfahrens der Rampen 25) in vertikaler Richtung z in Richtung auf die oberen Anschläge 16a der inneren Führungen 16 des Hohlprofils 10 angehoben, vergl. Figur 8b.

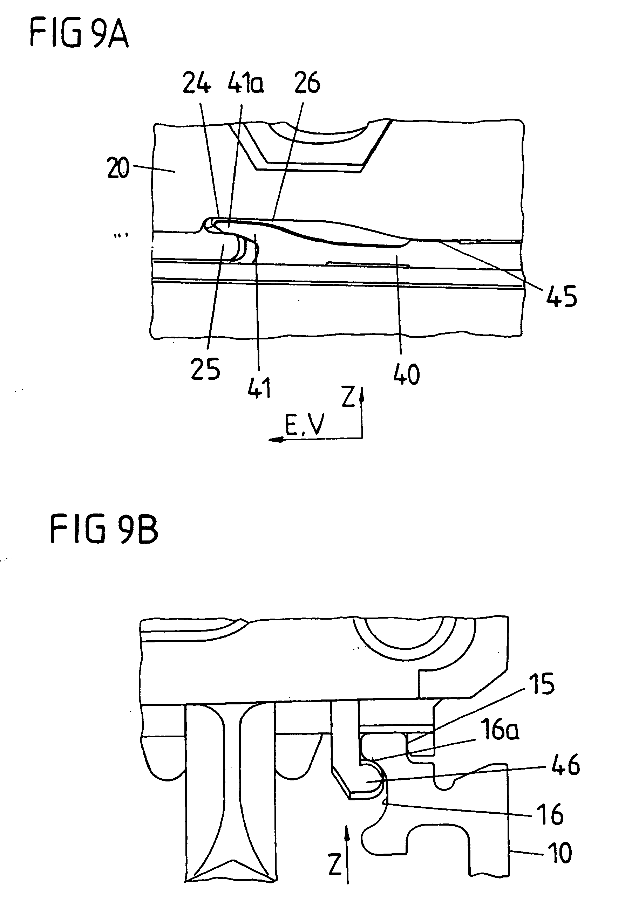

In den Figuren 9a und 9b ist schließlich die Endposition der Verbindungsmittel 41, 41 a in den zugeordneten Verbindungsstellen 24 des Montagefußes 20 dargestellt. Die Verbindungsmittel 41, 41a sind mit ihrer jeweiligen Andrücknase 41 a in die jeweils durch eine Nut gebildete Verbindungsstellen 24 des Montagefußes 20 oberhalb der jeweiligen Rampe 25 eingeschnappt bzw. eingerastet. Durch das vollständige Auffahren der Andrücknasen 41 a auf die jeweils zugeordnete Rampe 25 der entsprechenden Verbindungsstelle 24 sind die vorderen Führungsbereiche 46 der Schenkel 40 des Fortsatzes 4 soweit in vertikaler Richtung z angehoben worden, dass sie jeweils gegen einen oberen Anschlag 16a der entsprechend inneren Führung 16 des Hohlprofils 10 gedrückt werden. Hierdurch ist die vertikale Lage (senkrecht zur Erstreckungsrichtung E und Verschieberichtung V) des Fortsatzes 4 der Sicherungsvorrichtung 3, 4 bezüglich des Hohlprofils 10 des Trägerkörpers 1 festgelegt. Dies gilt somit auch für den am Fortsatz 4 befestigten Montagefuß 20 der Abtasteinheit 2. Die Lage wird dabei definiert durch die Dicke (Ausdehnung entlang der vertikalen Richtung z) der Schenkel 40 des Fortsatzes 4 an einem Auflagepunkt 45, über den die Schenkel 40 (neben der Verbindungsstelle 24) am Montagefuß 20 anliegen.

Somit ist durch die Befestigung des Grundkörpers 3 an der einen Stirnseite 21 des Montagefußes 20 (wie in den Figuren 6a bis 6d dargestellt) zugleich auch eine Verbindung zwischen dem Fortsatz 4 der Sicherungsvorrichtung 3, 4 und dem Montagefuß 20 vor dessen anderer Stirnseite 22 geschaffen. Gleichzeitig wird hierbei der Fortsatz 4 der Sicherungsvorrichtung 3, 4 an dem Hohlprofil 10 des Trägerkörpers festgeklemmt.

Das heißt, für das Herstellen der Verbindungen zwischen dem Fortsatz 4 und dem Montagefuß 20 sowie zwischen dem Fortsatz 4 und dem Trägerkörper 10 sind keine zusätzlichen Montageschritte neben dem ohnehin vorgesehenen Festlegen des Grundkörpers 3 der Sicherungsvorrichtung 3, 4 am Montagefuß 20 durch Verschieben entlang des Trägerkörpers 1 erforderlich.

Abschließend wird dann lediglich noch der Grundkörper 20 in der vorstehend anhand der Figuren 1a bis 5 beschriebenen Weise mittels der Rändelmutter 38, des Klemmstückes 37 sowie der Klemmfüße 36 des Grundkörpers 3 an den inneren Führungen 16 des Hohlprofils 10 festgeklemmt.

Die vorstehend beschriebene Sicherungsvorrichtung 3, 4 zeichnet sich zusammenfassend dadurch aus, dass zu deren form- und kraftschlüssiger Befestigung an dem Montagefuß 20 der Abtasteinheit 2 sowie an dem Hohlprofil 10 des Trägerkörpers 1 keine zusätzlichen Werkzeuge, wie zum Beispiel Schraubendreher, erforderlich sind, sondem dass hierfür lediglich der Grundkörper 3 der Sicherungsvorrichtung 3, 4 in Anschlag mit der einen Stirnseite 21 des Montagefußes 20 gebracht werden muss, wobei automatisch die Steck- und Rastverbindungen zwischen Sicherungsvorrichtung 3, 4 und Montagefuß 20 geschaffen werden sowie außerdem eine Klemmverbindung zwischen dem Fortsatz 4 der Sicherungsvorrichtung 3, 4 und dem Hohlprofil 10 des Trägerkörpers 1 erzeugt wird. Abschließend wird dann mittels der Rändelmutter 38 die klemmschlüssige Verbindung zwischen dem Grundkörper 3 und dem Hohlprofil 10 hergestellt. In entsprechender Weise ist auch eine Demontage der Sicherungsvorrichtung 3, 4 ohne Werkzeug möglich.

Die Sicherungsvorrichtung kann mittels der Rändelmutter 38 in drei unterschiedliche Zustände gebracht werden, wobei sie in dem einen Zustand an dem Hohlprofil 10 des Trägerkörpers 1 festgeklemmt ist, um die Abtasteinheit 2 an dem Trägerkörper 1 in einer definierten Solllage zu halten und die Einhaltung von Montagetoleranzen beim Einbau der Messeinrichtung in eine Werkzeugmaschine zu gewährleisten. In einem zweiten Zustand lässt sich die Sicherungsvorrichtung 3, 4 zusammen mit der Abtasteinheit 2 entlang der Erstreckungsrichtung E des Hohlprofils 10 bzw. des Trägerkörpers 1 verschieben, um die Abtasteinheit in eine bestimmte, vorgebbare Position bringen zu können. Im dritten Zustand schließlich liegt die Sicherungsvorrichtung 3, 4 lediglich lose auf dem Trägerkörper 1 auf und lässt sich von diesem entnehmen.

Die vorbeschriebene Sicherungsvorrichtung hat ferner die Vorteile, dass beide Seiten der Messeinrichtung 1, 2 als Montageflächen verwendet werden können, so dass eine Kabelabgangsrichtung frei gewählt werden kann, dass die Sicherungsvorrichtung bei gleichzeitiger Verwendung einer Montageschiene einsetzbar ist sowie dass keine den Trägerkörper 1 und den Montagefuß 20 umgreifenden Elemente erforderlich sind, um Anschlagflächen bei der Montage frei zu halten.

## Patentansprüche

1. Sicherungsvorrichtung für den Transport und die Montage einer Messeinrichtung zur Bestimmung der Lage zweier relativ zueinander beweglicher Bauteile (M1, M2) mit einer längserstreckten Messteilung (19), einem Trägerkörper (1) für die Messteilung (19), einer die Messteilung (19) abtastenden Abtasteinrichtung (2), die in definiertem Abstand von der Messteilung (19) geführt ist, und einem Montagefuß (20) zum Befestigen der Abtasteinrichtung (2) an einem der zueinander beweglichen Bauteile (M2), wobei die Sicherungsvorrichtung einen entlang einer Führungsbahn des Trägerkörpers längsverschieblichen Grundkörper (3) umfasst, der einerseits an dem Montagefuß (20) und andererseits an dem Trägerkörper (1) festlegbar ist, um den Montagefuß (20) in einer Solllage bezüglich des Trägerkörpers (1) zu halten, und wobei von dem Grundkörper (3) ein Fortsatz (4) absteht, der sich entlang der Messteilung (19) erstreckt,
**dadurch gekennzeichnet,**
**dass** an dem Fortsatz (4) Verbindungsmittel (41, 41 a) vorgesehen sind, die bei Festlegung des Grundkörpers (3) am Montagefuß (20) automatisch mit einer zugeordneten Verbindungsstelle (24) des Montagefußes (20) in Eingriff bringbar sind.

2. Sicherungsvorrichtung nach Anspruch 1, **dadurch gekennzeichnet, dass** die Verbindungsmittel (41, 41a) durch Verschieben des Grundkörpers (3) in Erstreckungsrichtung (E) des Fortsatzes (4) mit der Verbindungsstelle (24) in Eingriff bringbar sind.

3. Sicherungsvorrichtung nach Anspruch 1 oder 2, **dadurch gekennzeichnet, dass** die Verbindungsmittel (41, 41a) in Erstreckungsrichtung (E) des Fortsatzes (4) von dem Grundkörper (3) beabstandet sind und dass die Verbindungsmittel (41, 41 a) bevorzugt an einem von dem Grundkörper (3) beabstandeten Ende des Fortsatzes (4) vorgesehen sind.

4. Sicherungsvorrichtung nach einem der vorhergehenden Ansprüche, **dadurch gekennzeichnet, dass** die Verbindungsmittel (41, 41a) einstückig an dem Fortsatz (4) angeformt sind.

5. Sicherungsvorrichtung nach einem der vorhergehenden Ansprüche, **dadurch gekennzeichnet, dass** die Verbindungsmittel (41, 41a) des Fortsatzes (4) in die zugeordnete Verbindungsstelle (24) des Montagefußes (20) einführbar sind.

6. Sicherungsvorrichtung nach einem der vorhergehenden Ansprüche, **dadurch gekennzeichnet, dass** die Verbindungsmittel (41, 41a) zur Herstellung einer Steckverbindung ausgebildet sind.

7. Sicherungsvorrichtung nach einem der vorhergehenden Ansprüche, **dadurch gekennzeichnet, dass** die Verbindungsmittel (41, 41a) zur Herstellung einer formschlüssigen Verbindung ausgebildet sind.

8. Sicherungsvorrichtung nach einem der vorhergehenden Ansprüche, **dadurch gekennzeichnet, dass** der Fortsatz (4) im Bereich der Verbindungsmittel (41, 41 a) abgewinkelt ist, so dass die Verbindungsmittel (41, 41 a) über eine Rampe (25) der Verbindungsstelle (24) gleiten können.

9. Sicherungsvorrichtung nach einem der vorhergehenden Ansprüche, **dadurch gekennzeichnet, dass** der mit den Verbindungsmitteln (41, 41 a) versehene Abschnitt des Fortsatzes (4) durch elastische Deformation quer zur Erstreckungsrichtung (E) des Fortsatzes (4) bewegbar ist.

10. Sicherungsvorrichtung nach einem der vorhergehenden Ansprüche, **dadurch gekennzeichnet, dass** die Verbindungsmittel (41, 41 a) mindestens eine Andrücknase (41 a) aufweisen, die in die Verbindungsstelle (24) eingreifen können.

11. Sicherungsvorrichtung nach einem der vorhergehenden Ansprüche, **dadurch gekennzeichnet, dass** der Fortsatz (4) einstückig an dem Grundkörper (3) angeformt ist.

12. Sicherungsvorrichtung nach einem der vorhergehenden Ansprüche, **dadurch gekennzeichnet, dass** an dem Fortsatz (4) Führungsmittel (46, 47) vorgesehen sind, mittels derer der Fortsatz (4) entlang einer zugeordneten Führungseinrichtung (16) des Trägerkörpers (1) in Erstreckungsrichtung (E) der Messteilung (19) verschiebbar ist.

13. Sicherungsvorrichtung nach Anspruch 12, **dadurch gekennzeichnet, dass** die Führungsmittel (46, 47) in Erstreckungsrichtung (E) des Fortsatzes (4) an die Verbindungsmittel (41, 41 a) anschließen.

14. Sicherungsvorrichtung nach Anspruch 12 oder 13, **dadurch gekennzeichnet, dass** an dem Fortsatz (4) zwei in Erstreckungsrichtung (E) des Fortsatzes (4) voneinander beabstandete Führungsbereiche (46 und 47) der Führungsmittel (46, 47) vorgesehen sind.

15. Sicherungsvorrichtung nach einem der vorhergehenden Ansprüche, **dadurch gekennzeichnet, dass** der Fortsatz (4) zwei im Wesentlichen parallel zueinander erstreckte Schenkel (40) aufweist, die jeweils mit Verbindungsmitteln (41, 41 a) versehen sind.

16. Sicherungsvorrichtung nach einem der vorhergehenden Ansprüche, **dadurch gekennzeichnet, dass** der Grundkörper (3) am Montagefuß (20) durch Verschieben entlang der Führungsbahn (16) des Trägerkörpers (1) befestigbar ist.

17. Sicherungsvorrichtung nach Anspruch 16, **dadurch gekennzeichnet, dass** der Grundkörper (3) an dem Montagefuß (20) formschlüssig befestigbar ist, insbesondere durch eine Rastverbindung (23, 23a, 31, 31 a) und/oder eine Steckverbindung (23b, 32).

18. Sicherungsvorrichtung nach Anspruch 17, **dadurch gekennzeichnet, dass** der Grundkörper (3) mindestens ein Steckerelement (32) zum Einstecken in einen Steckerbereich (23b) des Montagefußes (20) aufweist.

19. Sicherungsvorrichtung nach Anspruch 18, **dadurch gekennzeichnet, dass** das Steckerelement (32) durch einen Vorsprung, insbesondere eine Andrücknase, zum Einstecken in eine Ausnehmung (23b) des Montagefußes (20) gebildet wird.

20. Sicherungsvorrichtung nach Anspruch 17, **dadurch gekennzeichnet, dass** der Grundkörper (3) mindestens ein Rastelement (31) zum Einrasten in eine Raststelle (23) des Montagefußes (20) aufweist.

21. Sicherungsvorrichtung nach Anspruch 20, **dadurch gekennzeichnet, dass** das Rastelement (31) durch einen in eine Rastöffnung (23) einrastbaren Rasthebel gebildet wird.

22. Sicherungsvorrichtung nach einem der vorhergehenden Ansprüche, **dadurch gekennzeichnet, dass** der Grundkörper (3) eine Klemmeinrichtung (36, 37) zum Festklemmen am Trägerkörper (1) aufweist.

23. Sicherungsvorrichtung nach einem der vorhergehenden Ansprüche, **dadurch gekennzeichnet, dass** der Grundkörper (3) Führungsmittel (35, 36) aufweist, mittels derer er entlang der Führungsbahn (15, 16) des Trägerkörpers (1) in Erstreckungsrichtung (E) der Messteilung (19) verschiebbar ist.

24. Sicherungsvorrichtung nach Anspruch 22 und 23, **dadurch gekennzeichnet, dass** die Führungsmittel (35, 36) mittels der Klemmeinrichtung (36, 37) an der Führungsbahn (15, 16) des Trägerkörpers (1) festklemmbar sind.

25. Sicherungsvorrichtung nach Anspruch 24, **dadurch gekennzeichnet, dass** zur Betätigung der Klemmeinrichtung (36, 37) ein Betätigungselement (38) an dem Grundkörper (3) vorgesehen ist, das auf ein Klemmelement (37) der Klemmeinrichtung (36, 37) einwirkt.

26. Sicherungsvorrichtung nach Anspruch 25, **dadurch gekennzeichnet, dass** das Betätigungselement (38) drehbar ausgebildet ist und insbesondere durch eine Rändelschraube oder Rändelmutter gebildet wird.

27. Sicherungsvorrichtung nach Anspruch 25 oder 26, **dadurch gekennzeichnet, dass** an dem Betätigungselement (38) Sperrmittel (380) vorgesehen sind, die mit einem zugeordneten Sperrelement (381) des Grundkörpers (3) zusammenwirken können, um eine Rückstellbewegung des Betätigungselementes (38) zu begrenzen.

28. Sicherungsvorrichtung nach einem der Ansprüche 25 bis 27, **dadurch gekennzeichnet, dass** an dem Betätigungselement (38) Raststellen (38a, 38b, 38c) vorgesehen sind, um das Betätigungselement (38) in unterschiedlichen Lagen arretieren zu können, die jeweils unterschiedlichen Zuständen der der durch das Betätigungselement (38) betätigbaren Klemmeinrichtung (36, 37) entsprechen.

29. Sicherungsvorrichtung nach einem der Ansprüche 25 bis 27, **dadurch gekennzeichnet, dass** an dem Betätigungselement (38) Markierungen vorgesehen sind, die unterschiedliche Zustände der durch das Betätigungselement (38) betätigbaren Klemmeinrichtung (36, 37) repräsentieren.

30. Messeinrichtung zur Bestimmung der Lage zweier relativ zueinander beweglicher Bauteile (M1, M2) mit
- einer längserstreckten Messteilung (19),
- einem Trägerkörper (1) für die Messteilung (19),
- einer die Messteilung (19) abtastenden Abtasteinrichtung (2), die in einem definierten Abstand von der Messteilung (19) geführt ist,
- einem Montagefuß (20) zum Befestigen der Abtasteinrichtung (2) an einem der zueinander beweglichen Bauteile (M2) und
- einer Sicherungsvorrichtung mit einem entlang einer Führungsbahn des Trägerkörpers (1) längsverschieblichen Grundkörper (3), der einerseits an dem Montagefuß (20) und andererseits an dem Trägerkörper (1) festlegbar ist, um den Montagefuß (20) in einer Solllage bezüglich des Trägerkörpers (1) zu halten,
**gekennzeichnet durch**
eine Ausbildung der Sicherungsvorrichtung (3, 4) nach einem der Ansprüche 1 bis 29.

31. Messeinrichtung nach Anspruch 30, **dadurch gekennzeichnet, dass** der Montagefuß (20) zwei entlang der Erstreckungsrichtung (E) der Messteilung (19) voneinander beabstandete Stirnseiten (21, 22) aufweist, wobei der Grundkörper (3) an der einen Stirnseite (21) des Montagefußes (20) festlegbar ist und der Fortsatz (4) an einer von dieser Stirnseite (21) in Erstreckungsrichtung (E) der Messteilung (19) beabstandeten Verbindungsstelle (24) an dem Montagefuß (20) festlegbar ist.

32. Messeinrichtung nach Anspruch 30 oder 31, **dadurch gekennzeichnet, dass** an dem Montagefuß (20) eine Verbindungsstelle (24) vorgesehen ist, in die die Verbindungsmittel (41, 41a) des Fortsatzes (4) automatisch eingreifen, wenn der Grundkörper (3) an dem Montagefuß (20) festgelegt wird.

33. Messeinrichtung nach Anspruch 32, **dadurch gekennzeichnet, dass** die Verbindungsmittel (41, 41a) in die Verbindungsstelle (40) einschnappen, wenn der Grundkörper (3) zur Befestigung an dem Montagefuß (20) entlang der Führungsbahn (15, 16) des Trägerkörpers (1) verschoben wird.

34. Messeinrichtung nach Anspruch 32 oder 33, **dadurch gekennzeichnet, dass** die Verbindungsmittel (41, 41a) formschlüssig mit der Verbindungsstelle (24) des Montagefußes (20) in Eingriff bringbar sind.

35. Messeinrichtung nach einem der Ansprüche 32 bis 34, **dadurch gekennzeichnet, dass** die Verbindungsstelle (24) eine Rampe (25) aufweist, mittels derer der Fortsatz (4) im Bereich seiner Verbindungsmittel (41, 41a) entlang einer Richtung (z) quer zur Erstreckungsrichtung (E) der Messteilung (19) bewegbar ist.

36. Messeinrichtung nach Anspruch 35 mit einer Sicherungsvorrichtung nach einem der Ansprüche 12 bis 14, **dadurch gekennzeichnet, dass** die Verbindungsmittel (41, 41a) mittels der Rampe (25) derart quer zur Erstreckungsrichtung (E) der Messteilung (19) bewegbar sind, dass die Führungsmittel (46) des Fortsatzes (4) gegen einen Anschlag (16a) der zugeordneten Führungsbahn (16) des Trägerkörpers (1) gedrückt werden.

37. Messeinrichtung nach einem der Ansprüche 30 bis 36, **dadurch gekennzeichnet, dass** der Fortsatz (4) sich zwischen dem Montagefuß (20) und dem Trägerkörper (1) erstreckt.

38. Messeinrichtung nach einem der Ansprüche 30 bis 37, **dadurch gekennzeichnet, dass** an dem Montagefuß (20) eine Einführfase (26) vorgesehen ist, um das Zuführen der Verbindungsmittel (41, 41a) zu der Verbindungsstelle (24) des Montagefußes (20) zu erleichtern.

39. Messeinrichtung nach einem der Ansprüche 30 bis 38 mit einer Sicherungsvorrichtung nach Anspruch 15, **dadurch gekennzeichnet, dass** der Montagefuß (20) zwei Verbindungsstellen (24) aufweist, die je einem der Verbindungsmittel (41, 41a) des Fortsatzes (4) zugeordnet sind.

40. Messeinrichtung nach einem der Ansprüche 30 bis 39 mit einer Sicherungsvorrichtung nach Anspruch 18 oder 19, **dadurch gekennzeichnet, dass** am Montagefuß (20) ein Steckerbereich (23b) zum Einführen des Steckerelementes (32) des Grundkörpers (3) vorgesehen ist.

41. Messeinrichtung nach einem der Ansprüche 30 bis 40 mit einer Sicherungsvorrichtung nach Anspruch 20 oder 21, **dadurch gekennzeichnet, dass** an dem Montagefuß (20) eine Raststelle (23) zum Einrasten des Rastelementes (31) des Grundkörpers (3) vorgesehen ist.

42. Messeinrichtung nach einem der Ansprüche 30 bis 41 mit einer Sicherungsvorrichtung nach Anspruch 27, **dadurch gekennzeichnet, dass** den Sperrmitteln (380) des Betätigungselementes (38) zur Bildung einer Rücklaufsperre ein Sperrelement (381) des Grundkörpers (3) zugeordnet ist.

43. Messeinrichtung nach einem der Ansprüche 30 bis 42 mit einer Sicherungsvorrichtung nach Anspruch 28, **dadurch gekennzeichnet, dass** am Grundkörper (3) ein Rastelement (39) zum Einrasten in die Raststellen (38a, 38b, 38c) des Betätigungselementes (38) vorgesehen ist.

44. Messeinrichtung nach einem der vorhergehenden Ansprüche, **dadurch gekennzeichnet, dass** die Führungsbahn (15, 16) des Trägerkörpers (1) erste Führungen (16) aufweist, an denen die Sicherungsvorrichtung (3, 4) festklemmbar ist.

45. Messeinrichtung nach Anspruch 44, **dadurch gekennzeichnet, dass** an dem Trägerkörper (43) zweite Führungen (15) parallel zu den ersten Führungen (16) verlaufen, um die Position der Sicherungsvorrichtung (3, 4) in der durch die Führungen (15, 16) definierten Ebene quer zur Erstreckungsrichtung (E) der Messteilung (19) zu fixieren.

## Claims

1. A securing device for the transport and the mounting of a measuring device for determining the position of two components (M1, M2), which can be moved relative to one another and which comprise a measuring scale (19), which extends longitudinally, a support body (1) for the measuring scale (19), a scanner (2), which scans the measuring scale (19) and which is guided at a defined distance from the measuring scale (19), and a mounting foot (20) for attaching the scanner (2) to one of the components (M2), which are movable relative to one another, wherein the securing device comprises a base body (3), which can be displaced longitudinally along a guide track of the support body and which can be fixed to the mounting foot (20) on the one side and to the support body (1) on the other side, so as to hold the mounting foot (20) in a desired position with reference to the support body (1) and wherein an extension (4), which extends along the measuring scale (19), projects from the base body (3),
**characterized in**
**that** provision is made on the extension (4) for connecting means (41, 41a), which can be automatically engaged with an assigned junction (24) of the mounting foot (20).

2. The securing device according to claim 1, **characterized in that** the connecting means (41, 41a) can be engaged with the junction (24) by displacing the base body (3) in the direction of extension (E) of the extension (4).

3. The securing device according to claim 1 or 2, **characterized in that** the connecting means (41, 41a) are spaced apart from the base body (3) in the direction of extension (E) of the extension (4) and **in that** the connecting means (41, 41a) are preferably provided on one end of the extension (4), which is spaced apart from the base body (3).

4. The securing device according to one of the preceding claims, **characterized in that** the connecting means (41, 41a) are integrally molded on the extension (4) in one piece.

5. The securing device according to one of the preceding claims, **characterized in that** the connecting means (41, 41a) of the extension (4) can be inserted into the assigned junction (24) of the mounting foot (20).

6. The securing device according to one of the preceding claims, **characterized in that** the connecting means (41, 41a) are embodied for establishing a plug-in connection.

7. The securing device according to one of the preceding claims, **characterized in that** the connecting means (41, 41a) are embodied for establishing a positive connection.

8. The securing device according to one of the preceding claims, **characterized in that** the extension (4) is angled in the area of the connecting means (41, 41a) such that the connecting means (41, 41a) can glide across a ramp (25) of the junction (24).

9. The securing device according to one of the preceding claims, **characterized in that** the section of the extension (4), which is provided with the connecting means (41, 41a) can be moved by means of elastic deformation at right angles to the direction of extension (E) of the extension (4).

10. The securing device according to one of the preceding claims, **characterized in that** the connecting means (41, 41a) encompass at least one pressure nose (41a), which can engage with the junction (24).

11. The securing device according to one of the preceding claims, **characterized in that** the extension (4) is integrally molded on the base body (3) in one piece.

12. The securing device according to one of the preceding claims, **characterized in that** provision is made on the extension (4) for guide means (46, 47), by means of which the extension (4) can be displaced along an assigned guide device (16) of the support body (1) in the direction of extension (E) of the measuring scale (19).

13. The securing device according to claim 12, **characterized in that** the guide means (46, 47) connect to the connecting means (41, 41a) in the direction of extension (E) of the extension (4).

14. The securing device according to claim 12 or 13, **characterized in that** provision is made on the extension (4) for two guide areas (46 and 47) of the guide means (46, 47), which are spaced apart from one another in the direction of extension (E) of the extension (4).

15. The securing device according to one of the preceding claims, **characterized in that** the extension (4) encompasses two journals (40), which extend substantially parallel to one another and which are in each case provided with connecting means (41, 41a).

16. The securing device according to one of the preceding claims, **characterized in that** the base body (3) can be attached to the mounting foot (20) by displacing along the guide track (16) of the support body (1).

17. The securing device according to claim 16, **characterized in that** the base body (3) can be attached to the mounting foot (20) in a positive fit, in particular by means of a snap-in connection (23, 23a, 31, 31a) and/or by means of a plug-in connection (23b, 32).

18. The securing device according to claim 17, **characterized in that** the base body (3) encompasses at least one plug element (32) for plugging into a plug area (23b) of the mounting foot (20).

19. The securing device according to claim 18, **characterized in that** the plug element (32) is formed by means of a projection, in particular by means of a pressure nose, for plugging into a recess (23b) of the mounting foot (20).

20. The securing device according to claim 17, **characterized in that** the base body (3) encompasses at least one snap-in element (31) for snapping into a snap-in location (23) of the mounting foot (20).

21. The securing device according to claim 20, **characterized in that** the snap-in element (31) is formed by means of a snap-in lever, which can be snapped into a snap-in opening (23).

22. The securing device according to one of the preceding claims, **characterized in that** the base body (3) encompasses a clamping device (36, 37) for fixedly clamping to the support body (1).

23. The securing device according to one of the preceding claims, **characterized in that** the base body (3) encompasses guide means (35, 36), by means of which it can be displaced along the guide track (15, 16) of the support body (1) in the direction of extension (E) of the measuring scale (19).

24. The securing device according to claim 22 and 23, **characterized in that** the guide means (35, 36) can be clamped to the guide track (15, 16) of the support body (1) by means of the clamping device (36, 37).

25. The securing device according to claim 24, **characterized in that** provision is made on the base body (3) for an actuating element (38), which acts on a clamping element (37) of the clamping device (36, 37) for actuating the clamping device (36, 37).

26. The securing device according to claim 25, **characterized in that** the actuating element (38) is embodied so as to be rotatable and is formed in particular by means of a knurled screw or knurled nut.

27. The securing device according to claim 25 or 26, **characterized in that** provision is made on the actuating element (38) for locking means (380), which can interact with an assigned locking element (381) of the base body (3), so as to define a resetting motion of the actuating element (38).

28. The securing device according to one of claims 25 to 27, **characterized in that** provision is made on the actuating element (38) for snap-in locations (38a, 38b, 38c), so as to be able to lock the actuating element (38) in different positions, which correspond in each case to the clamping device (36, 37), which can be actuated by means of the actuating element (38).

29. The securing device according to one of claims 25 to 27, **characterized in that** provision is made on the actuating element (38) for markings, which represent the different states of the clamping device (36, 37), which can be actuated by means of the actuating element (38).

30. A measuring device for determining the position of two components (M1, M2), which can be moved relative to one another, comprising
- a measuring scale (19) extending longitudinally,
- a support body (1) for the measuring scale (19),
- a scanner (2), which scans the measuring scale (19) and which is guided at a defined distance from the measuring scale (19),
- a mounting foot (20) for attaching the scanner (2) to one of the components (M2), which can be moved relative to one another and
- a securing device comprising a base body (3), which can be longitudinally displaced along a guide track of the support body (1) and which can be fixed to the mounting foot (20) on the one side and to the support body (1) on the other side, so as to hold the mounting foot (20) in a desired position with reference to the support body (1),
**characterized by**
an embodiment of the securing device (3, 4) according to one of claims 1 to 29.

31. The measuring device according to claim 30, **characterized in that** the mounting foot (20) encompasses to front faces (21, 22), which are spaced apart from one another along the direction of extension (E) of the measuring scale (19), wherein the base body (3) can be fixed to the one front side (21) of the mounting foot (20) and the extension (4) can be fixed on the mounting foot (20) at a junction (24), which is spaced apart from this front side (21) in the direction of extension (E) of the measuring scale (19).

32. The measuring device according to claim 30 or 31, **characterized in that** provision is made on the mounting foot (20) for a junction (24), with which the connecting means (41, 41a) of the extension (4) engage automatically when the base body (3) is fixed to the mounting foot (20).

33. The measuring device according to claim 32, **characterized in that** the connecting means (41, 41a) snap into the junction (40) when the base body (3) is displaced along the guide track (15, 16) of the support body (1) for attaching to the mounting foot (20).

34. The measuring device according to claim 32 or 33, **characterized in that** the connecting means (41, 41a) can be engaged in a positive fit with the junction (24) of the mounting foot (20).

35. The measuring device according to one of claims 32 to 34, **characterized in that** the junction (24) encompasses a ramp (25), by means of which the extension (4) can be moved along a direction (z) at right angles to the direction of extension (E) of the measuring scale (19) in the area of the connecting means (41, 41a) of said extension (4).

36. The measuring device according to claim 35, comprising a securing device according to one of claims 12 to 14, **characterized in that** the connecting means (41, 41a) can be moved at right angles to the direction of extension (E) of the measuring scale (19) by means of the ramp (25) such that the guide means (46) of the extension (4) are pressed against a stop (16a) of the assigned guide track (16) of the support body (1).

37. The measuring device according to one of claims 30 to 36, **characterized in that** the extension (4) extends between the mounting foot (20) and the support body (1).

38. The measuring device according to one of claims 30 to 37, **characterized in that** provision is made on the mounting foot (20) for an insertion nose (26), so as to facilitate the supply of the connecting means (41, 41a) to the junction (24) of the mounting foot (20).

39. The measuring device according to one of claims 30 to 38, comprising a securing device according to claim 15, **characterized in that** the mounting foot (20) encompasses two junctions (24), which are in each case assigned to one of the connection means (41, 41a) of the extension (4).

40. The measuring device according to one of claims 30 to 39, comprising a securing device according to claim 18 or 19, **characterized in that** provision is made on the mounting foot (20) for a plug-in area (23b) for inserting the plug-in element (32) of the base body (3).

41. The measuring device according to one of claims 30 to 40, comprising a securing device according to claim 20 or 21, **characterized in that** provision is made on the mounting foot (20) for a snap-in location (23) for engaging the snap-in element (31) of the base body (3).

42. The measuring device according to one of claims 30 to 41, comprising a securing device according to claim 27, **characterized in that** a locking element (381) of the base body (3) is assigned to the locking means (380) of the actuating element (38) for forming a backstop.

43. The measuring device according to one of claims 30 to 42, comprising a securing device according to claim 28, **characterized in that** provision is made on the base body (3) for a snap-in element (39) for snapping into the snap-in locations (38a, 38b, 38c) of the actuating element (38).

44. The measuring device according to one of the preceding claims, **characterized in that** the guide track (15, 16) of the support body (1) encompasses first guides (16), to which the securing device (3, 4) can be clamped.

45. The measuring device according to claim 44, **characterized in that** second guides (15) run parallel to the first guides (16) on the support body (43), so as to fix the position of the securing device (3, 4) in the plane, which is defined by the guides (15, 16), at right angles to the direction of extension (E) of the measuring scale (19).

## Revendications

1. Dispositif de sûreté destiné au transport et au montage d'un dispositif de mesure permettant de déterminer la position de deux pièces (M1, M2) mobiles l'une par rapport à l'autre, avec une graduation longitudinale (19), un corps de support (1) pour la graduation (19), un dispositif de balayage (2) balayant la graduation (19), qui est guidé à une distance prédéfinie de la graduation (19), et un pied de montage (20) pour la fixation du dispositif de balayage (2) sur l'une des pièces mobiles (M2), le dispositif de sûreté comprenant un corps de base (3) déplaçable en longueur, le long de la voie de guidage du corps de support, pouvant être fixé d'une part sur le pied de montage (20) et d'autre part sur le corps de support (1), afin de maintenir le pied de montage (20) dans une position de consigne par rapport au corps de support (1), et dans lequel un prolongement (4) partant du corps de base (3) s'étend le long de la graduation (19),
**caractérisé en ce que**
des moyens d'assemblage (41, 41a), aptes à être engagés automatiquement avec un point d'assemblage (24) correspondant du pied de montage (20), lors de la fixation du corps de base (3) sur le pied de montage (20), sont prévus sur le prolongement (4).

2. Dispositif de sûreté selon la revendication 1, **caractérisé en ce que** les moyens d'assemblage (41, 41a) peuvent être mis en engagement avec le point d'assemblage (24), par un déplacement du corps de base (3) dans la direction de développement (E) du prolongement (4).

3. Dispositif de sûreté selon la revendication 1 ou 2, **caractérisé en ce que** les moyens d'assemblage (41, 41a) sont espacés du corps de base (3) dans la direction de développement (E) du prolongement (4), et **en ce que** les moyens d'assemblage (41, 41a) sont de préférence prévus à une extrémité du prolongement (4) qui est espacée du corps de base (3).

4. Dispositif de sûreté selon l'une des revendications précédentes, **caractérisé en ce que** les moyens d'assemblage (41, 41a) sont formés d'une seule pièce sur le prolongement (4).

5. Dispositif de sûreté selon l'une des revendications précédentes, **caractérisé en ce que** les moyens d'assemblage (41, 41a) du prolongement (4) peuvent être insérés dans le point d'assemblage (24) correspondant du pied de montage (20).

6. Dispositif de sûreté selon l'une des revendications précédentes, **caractérisé en ce que** les moyens d'assemblage (41, 41a) sont conçus pour former un assemblage par emboîtement.

7. Dispositif de sûreté selon l'une des revendications précédentes, **caractérisé en ce que** les moyens d'assemblage (41, 41a) sont conçus pour former un assemblage par complémentarité de forme.

8. Dispositif de sûreté selon l'une des revendications précédentes, **caractérisé en ce que** le prolongement (4) est coudé dans la région des moyens d'assemblage (41, 41a), de sorte que les moyens d'assemblage (41, 41a) peuvent glisser par-dessus une rampe (25) du point d'assemblage (24).

9. Dispositif de sûreté selon l'une des revendications précédentes, **caractérisé en ce que** la section du prolongement (4) qui est pourvue des moyens d'assemblage (41, 41a) peut être déplacée transversalement à la direction de développement (E) du prolongement (4), par déformation élastique.

10. Dispositif de sûreté selon l'une des revendications précédentes, **caractérisé en ce que** les moyens d'assemblage (41, 41a) comportent au moins un nez de pression (41a), capable de s'engager dans le point d'assemblage (24).

11. Dispositif de sûreté selon l'une des revendications précédentes, **caractérisé en ce que** le prolongement (4) est formé d'une seule pièce sur le corps de base (3).

12. Dispositif de sûreté selon l'une des revendications précédentes, **caractérisé en ce que** des moyens de guidage (46, 47) sont prévus sur le prolongement (4), au moyen desquels le prolongement (4) peut être déplacé le long d'un dispositif de guidage (16) correspondant du corps de support (1), dans la direction de développement (E) de la graduation (19).

13. Dispositif de sûreté selon la revendication 12, **caractérisé en ce que** les moyens de guidage (46, 47) se trouvent à la suite des moyens d'assemblage (41, 41a) dans la direction de développement (E) du prolongement (4).

14. Dispositif de sûreté selon la revendication 12 ou 13, **caractérisé en ce que** deux zones de guidage (46 et 47) des moyens de guidage (46, 47), espacées l'une de l'autre dans la direction de développement (E) du prolongement (4), sont prévus sur le prolongement (4).

15. Dispositif de sûreté selon l'une des revendications précédentes, **caractérisé en ce que** le prolongement (4) comporte deux branches (40) s'étendant essentiellement parallèlement l'une à l'autre, qui sont pourvues chacune de moyens d'assemblage (41, 41a).

16. Dispositif de sûreté selon l'une des revendications précédentes, **caractérisé en ce que** le corps de base (3) peut être fixé au pied de montage (20) par un déplacement le long de la voie de guidage (16) du corps de support (1).

17. Dispositif de sûreté selon la revendication 16, **caractérisé en ce que** le corps de base (3) peut être fixé par complémentarité de forme sur le pied de montage (20), en particulier par un assemblage par enclenchement (23, 23a, 31, 31a) et/ou un assemblage par emboîtement (23b, 32).

18. Dispositif de sûreté selon la revendication 17, **caractérisé en ce que** le corps de base (3) comporte au moins un élément de connexion (32) destiné à être enfiché dans une zone de connexion (23b) du pied de montage (20).

19. Dispositif de sûreté selon la revendication 18, **caractérisé en ce que** l'élément de connexion (32) est formé par une saillie, en particulier un nez de pression, destiné à être inséré dans une cavité (23b) du pied de montage (20).

20. Dispositif de sûreté selon la revendication 17, **caractérisé en ce que** le corps de base (3) comporte au moins un élément d'enclenchement (31) destiné à être enclenché dans un point d'enclenchement (23) du pied de montage (20).

21. Dispositif de sûreté selon la revendication 20, **caractérisé en ce que** l'élément d'enclenchement (31) est formé par un levier d'enclenchement susceptible d'être engagé dans une ouverture d'enclenchement (23).

22. Dispositif de sûreté selon l'une des revendications précédentes, **caractérisé en ce que** le corps de base (3) comporte un dispositif de serrage (36, 37) pour le serrage sur le corps de support (1).

23. Dispositif de sûreté selon l'une des revendications précédentes, **caractérisé en ce que** le corps de base (3) comporte des moyens de guidage (35, 36), au moyen desquels il peut être déplacé le long de la voie de guidage (15, 16) du corps de support (1), dans la direction de développement (E) de la graduation (19).

24. Dispositif de sûreté selon les revendications 22 et 23, **caractérisé en ce que** les moyens de guidage (35, 36) peuvent être serrés sur la voie de guidage (15, 16) du corps de support (1) au moyen du dispositif de serrage (36, 37).

25. Dispositif de sûreté selon la revendication 24, **caractérisé en ce que** pour l'actionnement du dispositif de serrage (36, 37), il est prévu un élément d'actionnement (38) sur le corps de base (3), qui agit sur un élément de serrage (37) du dispositif de serrage (36, 37).

26. Dispositif de sûreté selon la revendication 25, **caractérisé en ce que** l'élément d'actionnement (38) est conçu rotatif, formé en particulier par une vis moletée ou un écrou moleté.

27. Dispositif de sûreté selon la revendication 25 ou 26, **caractérisé en ce que** des moyens de verrouillage (380) sont prévus sur l'élément d'actionnement (38), qui sont capables de coopérer avec un élément de verrouillage (381) correspondant du corps de base (3), pour limiter un mouvement de rappel de l'élément d'actionnement (38).

28. Dispositif de sûreté selon l'une des revendications 25 à 27, **caractérisé en ce que** des points d'enclenchement (38a, 38b, 38c) sont prévus sur l'élément d'actionnement (38), pour pouvoir bloquer l'élément d'actionnement (38) dans différentes positions correspondant respectivement à différents états du dispositif de serrage (36, 37) actionnable par l'élément d'actionnement (38).

29. Dispositif de sûreté selon l'une des revendications 25 à 27, **caractérisé en ce que** des marquages, représentant différents états du dispositif de serrage (36, 37) actionnable par l'élément d'actionnement (38), sont prévus sur l'élément d'actionnement (38).

30. Dispositif de mesure pour déterminer la position de deux pièces (M1, M2) mobiles l'une par rapport à l'autre, avec
- une graduation (19) longitudinale,
- un corps de support (1) pour la graduation (19),
- un dispositif de balayage (2) balayant la graduation (19), tout en étant guidé à une distance prédéfinie de la graduation (19),
- un pied de montage (20) pour la fixation du dispositif de balayage (2) sur l'une des pièces mobiles (M2), et
- un dispositif de sûreté avec un corps de base (3) déplaçable dans la longueur, le long de la voie de guidage du corps de support (1), qui peut être fixé d'une part sur le pied de montage (20) et d'autre part sur le corps de support (1), afin de maintenir le pied de montage (20) dans une position de consigne par rapport au corps de support (1),
**caractérisé par**
une réalisation du dispositif de sûreté (3, 4) selon l'une des revendications 1 à 29.

31. Dispositif de mesure selon la revendication 30, **caractérisé en ce que** le pied de montage (20) comporte deux faces frontales (21, 22) espacées l'une de l'autre le long de la direction de développement (E) de la graduation (19), dans lequel le corps de base (3) peut être fixé sur l'une des faces frontales (21) du pied de montage (20), et le prolongement (4) peut être fixé sur le pied de montage (20), en un point d'assemblage (24) espacé de cette face frontale (21) dans la direction de développement (E) de la graduation (19).

32. Dispositif de mesure selon la revendication 30 ou 31, **caractérisé en ce qu'**un point d'assemblage (24) est prévu sur le pied de montage (20), dans lequel les moyens d'assemblage (41, 41a) du prolongement (4) s'engagent automatiquement, lorsque le corps de base (3) est fixé sur le pied de montage (20).

33. Dispositif de mesure selon la revendication 32, **caractérisé en ce que** les moyens d'assemblage (41, 41a) s'enclenchent dans le point d'assemblage (24) lorsque le corps de base (3) est déplacé le long de la voie de guidage (15, 16) du corps de support (1), en vue de la fixation sur le pied de montage (20).

34. Dispositif de mesure selon la revendication 32 ou 33, **caractérisé en ce que** les moyens d'assemblage (41, 41a) peuvent être engagés par complémentarité de forme avec le point d'assemblage (24) du pied de montage (20).

35. Dispositif de mesure selon l'une des revendications 32 à 34, **caractérisé en ce que** le point d'assemblage (24) comporte une rampe (25), au moyen de laquelle le prolongement (4) peut être déplacé le long d'une direction (z) transversale à la direction de développement (E) de la graduation (19), dans la région de ses moyens d'assemblage (41, 41a).

36. Dispositif de mesure selon la revendication 35, avec un dispositif de sûreté selon l'une des revendications 12 à 14, **caractérisé en ce que** les moyens d'assemblage (41, 41a) peuvent être déplacés de telle manière transversalement à la direction de développement (E) de la graduation (19), au moyen de la rampe (25), que les moyens de guidage (46) du prolongement (4) sont serrés contre une butée (16a) de la voie de guidage (16) correspondante du corps de support (1).

37. Dispositif de mesure selon l'une des revendications 30 à 36, **caractérisé en ce que** le prolongement (4) s'étend entre le pied de montage (20) et le corps de support (1).

38. Dispositif de mesure selon l'une des revendications 30 à 37, **caractérisé en ce qu'**un chanfrein d'insertion (26) est prévu sur le pied de montage (20), pour faciliter le guidage des moyens d'assemblage (41, 41a) vers le point d'assemblage (24) du pied de montage (20).

39. Dispositif de mesure selon l'une des revendications 30 à 38, avec un dispositif de sûreté selon la revendication 15, **caractérisé en ce que** le pied de montage (20) comporte deux points d'assemblage (24), parmi lesquels chacun est attribué à l'un des moyens d'assemblage (41, 41a) du prolongement (4).

40. Dispositif de mesure selon l'une des revendications 30 à 39, avec un dispositif de sûreté selon la revendication 18 ou 19, **caractérisé en ce qu'**une zone de connexion (23b) est prévue sur le pied de montage (20), pour l'insertion de l'élément de connexion (32) du corps de base (3).

41. Dispositif de mesure selon l'une des revendications 30 à 40, avec un dispositif de sûreté selon la revendication 20 ou 21, **caractérisé en ce qu'**un point d'enclenchement (23) est prévu sur le pied de montage (20), pour l'enclenchement de l'élément d'enclenchement (31) du corps de base (3).

42. Dispositif de mesure selon l'une des revendications 30 à 41, avec un dispositif de sûreté selon la revendication 27, **caractérisé en ce qu'**un élément de verrouillage (381) du corps de base (3) est attribué aux moyens de verrouillage (380) de l'élément d'actionnement (38), pour former un dispositif anti-retour.

43. Dispositif de mesure selon l'une des revendications 30 à 42, avec un dispositif de sûreté selon la revendication 28, **caractérisé en ce qu'**un élément d'enclenchement (39) est prévu sur le corps de base (3), pour l'engagement dans les points d'enclenchement (38a, 38b, 38c) de l'élément d'actionnement (38).

44. Dispositif de mesure selon l'une des revendications précédentes, **caractérisé en ce que** la voie de guidage (15, 16) du corps de support (1) comporte des premiers guidages (16), sur lesquels le dispositif de sûreté (3, 4) peut être bloqué.

45. Dispositif de mesure selon la revendication 44, **caractérisé en ce que** des deuxièmes guidages (15) s'étendent parallèlement aux premiers guidages (16) sur le corps de support (43), afin de fixer la position du dispositif de sûreté (3, 4) dans le plan défini par les guidages (15, 16), transversalement à la direction de développement (E) de la graduation (19).
